# EUROPEAN PATENT SPECIFICATION

(11) **EP 1 554 524 B1**
(45) Date of publication and mention of the grant of the patent: **12.08.2009**
(21) Application number: 03808011.5
(22) Date of filing: 23.09.2003
(51) Int. Cl.: F23R 3/28, F02C 7/22

(54) **A FUEL INJECTOR**
KRAFTSTOFFEINSPRITZDÖSE
INJECTEUR DE COMBUSTIBLE

(30) Priority: 10.10.2002 SE 0202997; 10.10.2002 US 319601 P
(43) Date of publication of application: 20.07.2005
(73) Proprietor: Volvo Aero Corporation, 46181 Trollhättan (SE)
(72) Inventor: BERGLUND, Joakim, S-461 53 Trollhättan (SE); BÄCKANDER, Patrik, S-461 59 Trollhättan (SE); DAHLIN, Jens, S-461 30 Trollhättan (SE); FALK, Hans, S-461 34 Trollhättan (SE); GUSTAFSSON, Bernhard, S-411 11 Göteborg (SE); LINDBLAD, Klas, S-461 59 Trollhättan (SE); SALOMONSSON, Torbjörn, S-462 61 Vänersborg (SE)
(74) Representative: Fröhling, Werner Otto
(86) International application number: PCT/SE2003/001479
(87) International publication number: WO 2004/033966

(56) References cited:
- GB-A- 2 158 570
- US-A- 2 978 870
- US-A- 3 002 353
- US-A- 4 887 425
- US-B1- 6 334 303

## Description

The present invention relates to a fuel injector, comprising a chamber with a fuel inlet and a plurality of fuel outlets, and comprising a fuel distributor that is arranged in the chamber for the purpose of distributing fuel introduced into the chamber via the fuel inlet to the outlets.

It should be understood that, according to the invention, the fuel could be injected either directly or indirectly via the fuel outlets of the fuel injector into the combustion chamber (or chambers).

"Fuel injector" should be understood in a broad sense and includes what is normally referred to as a spray bar in jet engine technology, Such spray bars are then provided for the purpose of injecting fuel into the afterburner of the engine in question.

"Engine" may include any engine which for its operation uses a fuel that is injected either in liquid or gaseous state into one or more combustion chambers and where there is a need of distributing the fuel in precise pre-determined amounts to the combustion chamber or chambers via the outlets of the fuel injector.

However, a particularly relevant application according the invention, includes jet engines equipped with an afterburner into which fuel needs to be injected with high precision during operation. Therefore, the invention will be described by way of example with reference to such a preferred application.

### BACKGROUND OF THE INVENTION

In the spray bar head or a jet engine equipped with an afterburner there is provided a chamber or a collector volume into which fuel, in liquid and/or gaseous state, is introduced via a fuel inlet provided in a wall portion of the spray bar head. The spray bar head also comprises a plurality of fuel outlets from the collector volume, said outlets being provided in another wall portion of the spray bar head than the fuel inlet. In the collector volume the fuel introduced via the inlet is primarily distributed to the outlets in pre-determined amounts, Specific restriction elements may be provided at one or more outlets for the purpose of affecting the fuel flow rate individually for one or more outlets.

Examples of spray bar heads are given in US3002353 and

US2978870.

US3002353 relates to a combustion chamber according to the preamble of claim 1 having a casing supporting a plurality of fuel injectors positioned about the casing, which fuel injectors are interconnected by a manifold for receiving fuel.

US2978870 relates to a fuel injector comprising a fuel manifold connected to receive fuel from a fuel supply means and a plurality of spray bars assemblies disposed in spaced relationship circumferentially of a combustion chamber. In other examples of prior art, the collector volume is delimited by a cylinder and opposite end walls that are provided at opposite ends of the cylinder. The cylinder may comprise one or more portions with restricted width as well as one or more truncated portions. Typically the inlet is arranged in the cylinder wall and the outlets are provided in one of the end walls. For such a spray bar head geometry it has been found that, without any kind of fuel distributor provided inside the collector volume, there will be static pressure oscillations inside the collector volume, resulting in corresponding velocity fluctuations in of the fuel exiting via the fuel outlets, which in itself is a drawback with respect to the need of precise control of the fuel flow via the outlets.

Therefore, prior art suggests the use of a fuel distributor or a fuel distributing body arranged inside the collector volume. According to prior art, fuel distributors comprise one or more distributor bodies that are produced by way of casting, preferably in one piece with any one of the walls of the spray bar head, that wall then being attached to the adjacent wall or walls by means of welding or brazing.

### THE OBJECT OF THE INVENTION

It is an object of the present invention to provide a fuel injector that is advantageous in relation to fuel injectors of prior art with respect to production reasons.

In particular, the object of the present invention is to provide a fuel injector the fuel distributor of which is effective but still easier, or cheaper, to manufacture with contemporary production methods than corresponding fuel distributors according to prior art,

The object of the invention is also to present an alternative distributor body geometry, that guarantees a sufficient mixing of liquid and gaseous fuel introduced into the collector chamber of the fuel injector and a pre-determined distribution of fuel to the outlets of the collector chamber, and that suppresses the generation of fuel velocity fluctuations and fuel wave oscillations in the collector chamber of the fuel injector.

### BRIEF DESCRIPTION OF THE INVENTION

The object of the invention is achieved by means of the initially defined fuel injector, characterised in that fuel distributor comprises a generally rotary symmetric distributor body. Rotary symmetric is referred to as presenting a generally circular outer periphery.

According to a preferred embodiment of the invention, the fuel injector chamber is delimited by at least one side wall, and said fuel distributor defines a lid or plug that forms an end wall in relation thereto, These features further enhances the production-related advantage of the design according to the invention.

Preferably, the fuel inlet is provided in the side wall and that the outlets are provided in an end wall.

According to the invention, the fuel outlets should be provided in an end wall opposite to an end wall that is formed by the fuel distributor or to which the distributor body is attached.

In further accordance with the invention, the fuel injector comprises a cylinder that defines the side wall, and the cylinder has a generally circular inner periphery.

Moreover, it is preferred, both from a production and a fuel flow point of view, that the distributor body is concentric with the cylinder,

The distributor body should be located in front of the fuel and cover the fuel inlet, in order to sufficiently affect the incoming flow of fuel in order to avoid any irregularities in the flow pattern that might induce flow wave oscillations in the collector chamber. In accordance with this feature the distributor body is both longer in length direction and wider in its width direction than the corresponding length and width of the fuel inlet or each individual fuel inlet to the collector chamber.

The distributor body may be produced by subjecting a work piece to a turning operation. Here, machining by way of a turning operation is regarded as favourable from production technical reasons when compared to casting. The rotary symmetric design of the distributor body promotes turning operation as the preferred production technique.

Preferably, the distributor body is formed to its final shape by the turning operation, meaning that virtually no further shaping of the one and only distributor body is needed before positioning it in its operational position.

The distributor body may be attached to an adjacent side wall of the fuel injector by means of welding or brazing. Preferably, the side wall is formed by a cylinder with a circular inner periphery, as described above for the preferred embodiment of the fuel injector. Then, the circular outer periphery of the part of the distributor that defines an end wall can easily be fitted into or on the end of the cylinder and be attached thereto.

The object of the invention is also achieved by means of an engine comprising a combustion chamber, characterised in that it comprises a fuel injector according to the invention for the injection of fuel into the combustion chamber via the fuel outlets of the fuel injector. It should be understood that any motor or engine with a combustion chamber is included in the scope of protection thereby claimed. The motor/ engine may comprise one or more combustion chambers, and the outlets from the collector chamber of the fuel injector may lead to a single combustion chamber for injection of fuel into the latter via a plurality of injection locations, for example for even distribution of fuel as in the case of a spray bar in a jet engine afterburner. The fuel may also be distributed to a plurality of combustion chambers, one or more outlets thereby communicating with or leading to each combustion chamber, and different outlets leading to different combustion chambers.

According to a preferred embodiment, the engine it is a jet engine and the combustion chamber is an afterburner chamber. Preferably, the jet engine is positioned in an aeroplane.

Such a jet engine then comprises a plurality of fuel injection tubes connected to said plurality of outlets of the fuel injector and extending into the afterburner chamber. The afterburner chamber defines a channel with a radial direction and a longitudinal direction. The fuel injection tubes are directed from an outer radial position inwards towards the longitudinal axis of the afterburner, and they should be angularly evenly distributed around said axis or around the periphery of the afterburner wall.

In the preferred embodiment described above, the engine further comprises a radial flame holder and the fuel injector tubes extend into the afterburner chamber upstream the radial flame holder as seen in the gas flow direction in the afterburner.

Further features and advantages of the present invention will be presented in the following detailed description of a preferred embodiment of the invention.

### BRIEF DESCRIPTION OF THE DRAWINGS

A preferred embodiment of the invention will now be described by way of example with reference to the annexed drawings on which:

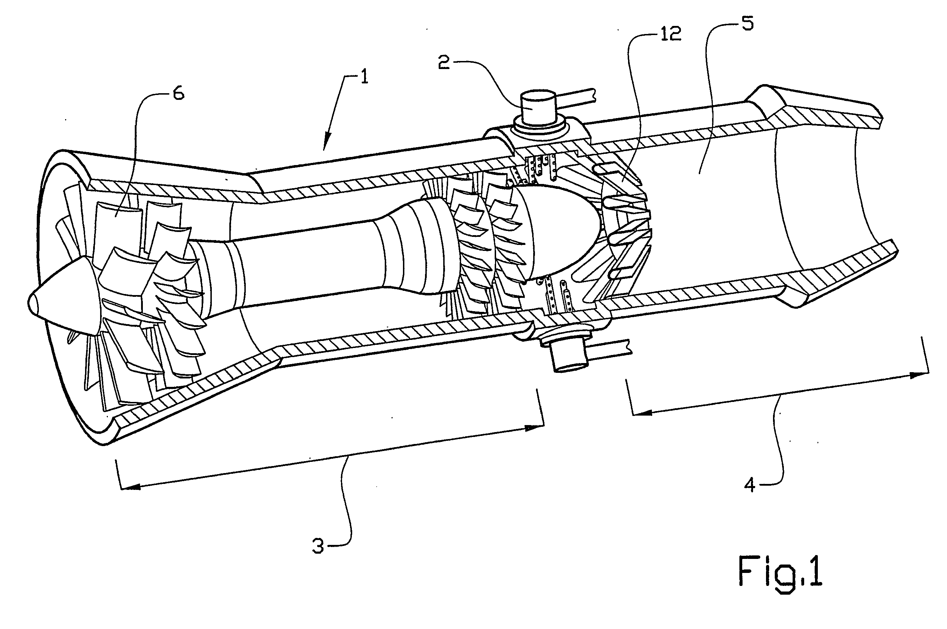

Fig. 1 is a schematic cross-section of a jet engine equipped with an afterburner and a fuel injector according to the invention,

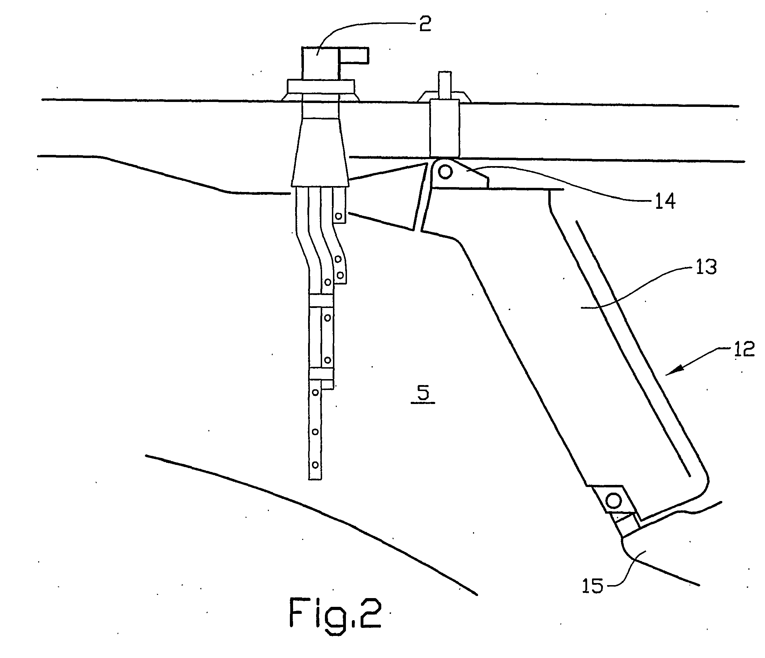

Fig. 2 is an enlarged side view of a part of the afterburner of the jet engine according to fig. 1, with a fuel injector according to the invention,
Fig. 3 is a side view of a cross-section, in a further enlarged scale, of a part of the fuel injector according to the invention shown in isolation from other engine parts, and
Fig. 4 is a perspective cross-section of the part shown in fig. 3.

### DETAILED DESCRIPTION OF THE INVENTION

Fig, 1 shows a jet engine 1 equipped with a plurality of fuel injectors 2 one of which is shown in the figure. The engine comprises a gas turbine section 3 and an afterburner section 4, the gas turbine section 3 being arranged upstream the afterburner section 4 as seen in a gas flow direction through the engine 1. The fuel injectors are arranged in a circular arrangement around the inner periphery of the afterburner 4 for the purpose of injecting fuel into the interior of the afterburner 4, that is the afterburner chamber 5. Here, the engine 1 comprises twenty four fuel injectors 2 in said circular arrangement.

The gas turbine section 1 comprises a plurality of rows of turbine blades 6 arranged in a way known per se. Hot gases are emitted from the turbine section 3 into the afterburner section 4,

Each fuel injector 2 comprises a fuel collector chamber 7, a fuel inlet 8 into the collector chamber 7, a fuel inlet pipe 9, a plurality of fuel outlets 10 from the collector chamber 9 and a corresponding plurality of outlet tubes or injector tubes 11 that lead from said outlets 10 into the afterburner chamber 5. Here, each fuel injector 2 comprises four outlets and four injector tubes 11. However, it is also contemplated to equip each fuel injector 2 with only two or three injector tubes 11, or more than four such tubes.

Adjacent to and downstream the row of fuel injectors 2, as seen in the gas flow direction in the engine 1, there is provided a radial flame holder 12. The flame holder 12 has the task of regulating the gas flow conditions, in particular to reduce the flow velocity, in the afterburner 4 in order to permit optimal combustion of the fuel introduced into the latter via the injector tubes 11. The flame holder 12 comprises a row of stays or struts 13 each of which extends radially from an outer peripheral connection 14 with the inner periphery of the afterburner wall to an inner ring 15. In a preferred embodiment there are two fuel injectors 2 located in each angle sector between two of the struts or stays 13.

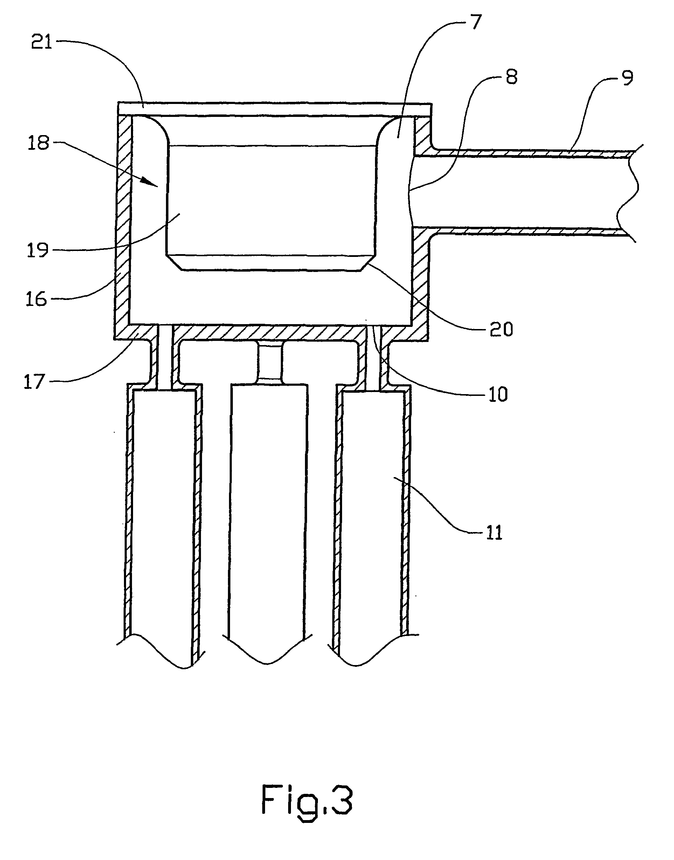

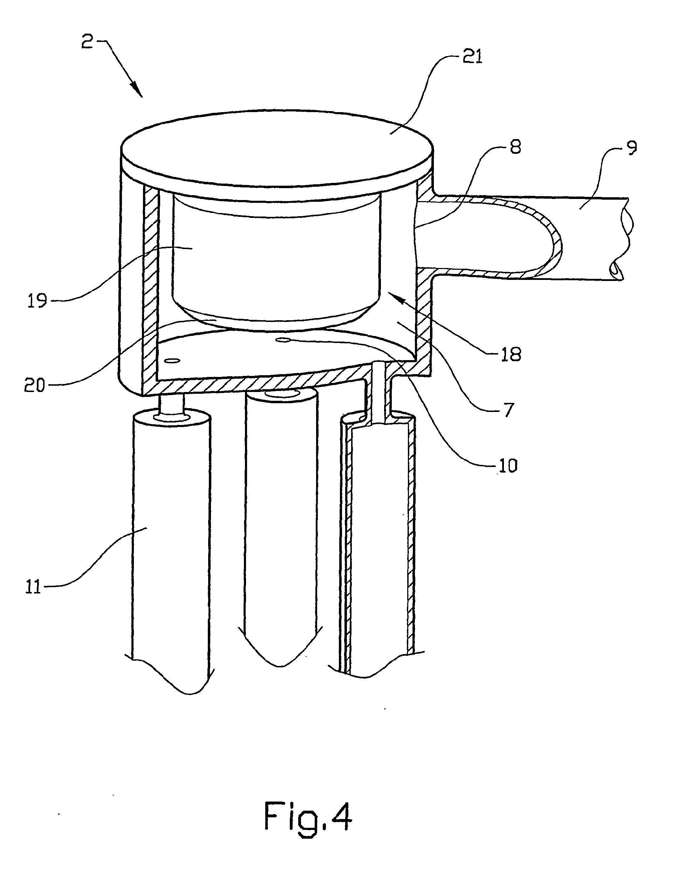

With reference to fig. 3 and fig. 4 a more detailed description of the fuel injector 2 will now be given.

The collector chamber 7 of the injector 2 is delimited by a cup-shaped body that has a cylindrical side wall with a circular inner periphery 16 and a generally flat, circular end wall 17, The angle between the side wall 16 and the plane of the end wall 17 is 90°, Preferably, the cup-shaped body 16, 17 has been produced by pin milling a work piece. The cup-shaped body 16, 17 has a width of 1-1,5 cm and a substantially smaller wall thickness, for example in the order of 1-5 mm. It is made of a metal or metal alloy. The fuel inlet 8 is provided in the side wall 16 and the fuel outlets 11 are provided in the end wall 17. The centre axis of the inlet pipe 9 is directed towards the centre axis of the cup-shaped body 16,17, such that the fuel introduced via the inlet 8 has a flow direction generally towards the centre of the collector chamber 7.

The fuel injector 2 further comprises a fuel distributor 18 that protrudes into the collector chamber 7 from an opposite end of the chamber 7 with regard to the first end wall 17 mentioned above. The fuel distributor comprises a fuel distributor body 1, 9 that has a diameter that is smaller than the inner diameter of the side wall 16, thereby leaving a spacing between side wall 16 and distributor body 19 free for flow of the fuel introduced via the inlet 8. The spacing is larger than 0,5, preferably approximately 1 mm for the injector in question. The distributor 18, or at least the body 19, is.rotary symmetric in the respect that it has a generally circular outer periphery along its entire length. When mounted, it is coaxial (coinciding rotational and centre axis) with the cylinder that defines the side wall 16 and, thus, positioned in the centre of the latter.

The distributor body 19 ends at a given distance from the first end wall 17, thereby leaving a sufficient spacing between the body 19 and the end wall 17 to guarantee a sufficient and stable flow of fuel out of the outlets 10. Nevertheless, the distributor body 19 shall extend such a distance towards the first end wall 17 that it, if projected on the side wall 16, shall cover the inlet 8 in order to suppress fuel jet oscillations in the collector chamber 7. The free end of the body 19 that points at the first end is rounded, chamfered or bevelled, such that the free end of the body 19 defines a truncated cone 20, in order to further improve the flow conditions in the collector chamber 7.

Opposite to the free end of the distributor body 19 the fuel distributor 18 presents a circular flange 21 that has a diameter that is equal to or larger than the inner diameter of the cylindrical side wall 16 at its end portion opposite to the end where the first end wall, 17 is located. The flange 21 defines a second end wall that is located opposite to the first end wall 17. The flange 21 and the distributor body 19 defines a solitaire formed by turning of one and the same work piece in a lathe. The flange is then attached to the side wall 16, preferably by means of welding. Thus the collector chamber 7 is delimited by the two opposite end walls, defined by the first end wall 17 and the fuel distributor 18, and the cylindrical side wall 15.

It should be stated that, according to this preferred embodiment, the distributor body 19 has generally the same diameter along its whole length, apart from the truncated cone part 20 and the smooth transition region in which the body 19 transits to the flange 21.

Thanks to the distributor body 19, the incoming fuel jet is broken up within a rather short distance from the inlet 8, the generation of fuel wave oscillations is suppressed, and the fuel mass flow rate out of the collector chamber 8 and the injector 2 becomes stable. A further advantage of the geometrical features of the distributor 18 is that it becomes unnecessary to adjust the angular position of the distributor body 19 in relation to the inlet 8 and the outlets 10 when the distributor is attached to the adjacent wall 16.

It should be realised that the above presentation of the invention has been made by way of example, and that alternative embodiments will be obvious for a man skilled in the art without going beyond the scope of protection as claimed in the annexed patent claims supported by the description and the annexed drawings.

For example, the invention is not restricted to only one inlet 8 into the collector chamber 9, but could consist of more than one such inlet.

It should be understood that, according to the invention, each of a plurality of fuel injectors or spray bars arranged around an afterburner chamber should be provided with the kind of fuel distributor that has been described above,

It should also be realised that, apart from its oscillation-suppressing function, the distributor body 19 also acts as a mixer in the sense that it improves the mixing of gaseous and liquid fuel that is introduced into the collector chamber 7.

## Claims

1. A fuel injector (2), comprising a chamber (7) with a fuel inlet (8) and a plurality of fuel outlets (10), and comprising a fuel distributor (18) that is arranged in the chamber (7) for the purpose of distributing fuel introduced into the chamber (7) via the fuel inlet (8) to the outlets (10), said chamber (7) being delimited by at least one side wall (16) provided with said fuel inlet (8) and a first end wall (17) provided with said fuel outlets (10) **characterised in that** the fuel distributor (18) comprises a generally rotary symmetric distributor body (19) which extends towards the first end wall (17) and ends at a given distance from the first end wall (17) so as to be located in front of the fuel inlet (8) and cover the fuel inlet (8) when being projected on the side wall (16).

2. A fuel injector according to claim 1, **characterised in that** the fuel distributor (18) defines a lid or plug that forms a second end wall (21) in relation to said at least one side wall (15).

3. A fuel injector according to claim 1 or 2, **characterised in that** the first end wall (17) is opposite to a second end wall (21) that is formed by the fuel distributor (18) or to which the fuel distributor (18) is attached.

4. A fuel injector according to any one of claims 1-3, **characterised in that** said side wall defines a cylinder (16) which has a generally circular inner periphery.

5. A fuel injector according to claim 4, **characterised in that** the distributor body (19) is concentric with the cylinder (16).

6. An engine comprising a combustion chamber, **characterised in that** it comprises a fuel injector (2) according to any one of claims 1-5 for injection of fuel into the combustion chamber (5) via the fuel outlets (10) of the fuel injector (1).

7. An engine according to claim 6, **characterised in that** it is a jet engine and that the combustion chamber (5) is an afterburner chamber.

8. An engine according to claim 7, **characterised in that** it comprises a plurality of fuel injection tubes (11) connected to said plurality of outlets (10) of the fuel injector (1) and extending into the afterburner chamber (5).

9. An engine according to claim 7 or 8, **characterised in that** it comprises a radial flame holder (12) and that the fuel injector tubes (11) extend into the afterburner chamber (5) upstream the radial flame holder (12) as seen in the gas flow direction in the afterburner.

## Patentansprüche

1. Kraftstoffeinspritzeinrichtung (2), die eine Kammer (7) mit einem Kraftstoffeinlass (8) und einer Vielzahl von Kraftstoffauslässen (10) umfasst, und einen Kraftstoffverteiler (18) umfasst, der in der Kammer (7) angeordnet ist, um in die Kammer (7) über den Kraftstoffeinlass (8) eingeführten Kraftstoff auf die Auslässe (10) zu verteilen, wobei die Kammer (7) durch wenigstens eine Seitenwand (16), die mit dem Kraftstoffeinlass (8) versehen ist, und eine erste Stirnwand (17) begrenzt ist, die mit den Kraftstoffauslässen (10) versehen ist, **dadurch gekennzeichnet, dass** der Kraftstoffverteiler (18) einen insgesamt rotationssymmetrischen Verteilerkörper (19) umfasst, der sich in Richtung der ersten Stirnwand (17) erstreckt und in einem vorgegebenen Abstand von der ersten Stirnwand (17) so endet, dass er vor dem Kraftstoffeinlass (8) angeordnet ist und den Kraftstoffeinlass (8) abdeckt, wenn er von der Seitenwand (16) vorsteht.

2. Kraftstoffeinspritzeinrichtung nach Anspruch 1, **dadurch gekennzeichnet, dass** der Kraftstoffverteiler (18) einen Deckel oder Stopfen bildet, der eine zweite Stirnwand (21) bezüglich der wenigstens einen Seitenwand (16) bildet.

3. Kraftstoffeinspritzeinrichtung nach Anspruch 1 oder 2, **dadurch gekennzeichnet, dass** die erste Stirnwand (17) einer zweiten Stirnwand (21) entgegengesetzt ist, die durch den Kraftstoffverteiler (18) gebildet wird oder an der der Kraftstoffverteiler (18) angebracht ist.

4. Kraftstoffeinspritzeinrichtung nach einem der Ansprüche 1 bis 3, **dadurch gekennzeichnet, dass** die Seitenwand einen Zylinder (16) bildet, der einen insgesamt kreisförmigen Innenumfang aufweist.

5. Kraftstoffeinspritzeinrichtung nach Anspruch 4, **dadurch gekennzeichnet, dass** der Verteilerkörper (19) zu dem Zylinder (16) konzentrisch ist.

6. Motor mit einer Verbrennungskammer, **dadurch gekennzeichnet, dass** er eine Kraftstoffeinspritzeinrichtung (2) nach einem der Ansprüche 1 bis 5 zur Einspritzung von Kraftstoff in die Verbrennungskammer (5) über die Kraftstoffauslässe (10) der Kraftstoffeinspritzeinrichtung (1) umfasst.

7. Motor nach Anspruch 6, **dadurch gekennzeichnet, dass** er ein Strahltriebwerk ist und dass die Verbrennungskammer (5) eine Nachbrennerkammer ist.

8. Motor nach Anspruch 7,**dadurch gekennzeichnet, dass** er eine Vielzahl von Kraftstoffeinspritzrohren (11) umfasst, die mit der Vielzahl von Auslässen (10) der Kraftstoffeinspritzeinrichtung (1) verbunden sind und sich in die Nachbrennerkammer (5) erstrecken.

9. Motor nach Anspruch 7 oder 8, **dadurch gekennzeichnet, dass** er einen radialen Flammenhalter (12) umfasst und dass die Kraftstoffeinspritzrohre (11) sich in die Nachbrennerkammer (5) - in der Gasströmungsrichtung in dem Nachbrenner gesehen - stromaufwärts des radialen Flammenhalters (12) erstrecken.

## Revendications

1. Injecteur de carburant (2) comprenant une chambre (7) ayant une entrée de carburant (8) et une pluralité de sorties de carburant (10), et comprenant un distributeur de carburant (18) qui est agencé dans la chambre (7) dans le but de distribuer du carburant introduit dans la chambre (7) via l'entrée de carburant - (8) vers les sorties (10), ladite chambre (7) étant délimitée par au moins une paroi latérale (16) munie de ladite entrée de carburant (8) et une première paroi d'extrémité (17) munie desdites sorties de carburant (10), **caractérisé en ce que** le distributeur de carburant (18) comprend un corps de distributeur généralement symétrique en rotation (19) qui s'étend en direction de la première paroi d'extrémité (17) et se termine à une distance donnée à partir de la première paroi d'extrémité (17) de manière à être positionné en vis-à-vis de l'entrée de carburant (8) et recouvrir l'entrée de carburant (8) lorsqu'il est projeté sur la paroi latérale (16).

2. Injecteur de carburant selon la revendication 1, **caractérisé en ce que** ledit distributeur de carburant (18) définit un couvercle ou bouchon qui forme une seconde paroi d'extrémité (21) en relation avec ladite au moins une paroi latérale (16).

3. Injecteur de carburant selon la revendication 1 ou 2, **caractérisé en ce que** la première paroi d'extrémité (17) est opposée à une seconde paroi d'extrémité (21) qui est formée par le distributeur de carburant (18) ou à laquelle le distributeur de carburant (18) est relié.

4. Injecteur de carburant selon l'une quelconque des revendications 1 à 3, **caractérisé en ce que** ladite paroi latérale définit un cylindre (16) qui a une périphérie inférieure généralement circulaire.

5. Injecteur de carburant selon la revendication 4, **caractérisé en ce que** le corps de distributeur (19) est concentrique avec le cylindre (16).

6. Moteur comprenant une chambre de combustion, **caractérisé en ce qu'**il comporte un injecteur de carburant (2) selon l'une quelconque des revendications 1 à 5 pour injecter du carburant dans la chambre de combustion (5) via les sorties de carburant (10) de l'injecteur de carburant (1).

7. Moteur selon la revendication 6, **caractérisé en ce qu'**il s'agit d'un turboréacteur et **en ce que** la chambre de combustion (5) est une chambre de post-combustion.

8. Moteur selon la revendication 7, **caractérisé en ce qu'**il comprend une pluralité de tubes d'injection de carburant (11) raccordés à ladite pluralité de sorties (10) de l'injecteur de carburant (1) et s'étendant dans la chambre de post-combustion.

9. Moteur selon la revendication 7 ou 8, **caractérisé en ce qu'**il comprend un stabilisateur de flamme radial (12) et **en ce que** les tubes d'injecteur de carburant (11) s'étendent dans la chambre de post-combustion (5) en amont du stabilisateur de flamme radial (12) tel que vu dans la direction d'écoulement des gaz dans la post-combustion.
